# EUROPEAN PATENT APPLICATION

(11) **EP 2 383 196 A1**
(43) Date of publication of application: **02.11.2011**
(21) Application number: 11163159.4
(22) Date of filing: 20.04.2011
(51) Int. Cl.: B65D 39/00, B29C 45/14, B29C 37/00, B29C 44/12, B29C 43/18

(54) **Method and device for producing thermoplastic caps with rigid head**

(30) Priority: 30.04.2010 IT PS20100012
(71) Applicant: Supercap S.r.l., 61024 Mombaroccio (IT)
(72) Inventor: Bannini, Mirco, 61020 Sant' Angelo in Lizzola (PU) (IT)
(74) Representative: Gustorf, Gerhard

(57) **Abstract**

Method for producing thermoplastic caps (1) with rigid head (2), of the type made up of an elastically deformable penetrating body (6) made of closed-cell foamed elastomer material constrained by submerging the relative portion (7) under constant polymerisation in a recess (3) with an internal undercut and/or expansion (4) made in a rigid head (2), preferably obtained made of wood, comprising translation with fixed travel (12) and retention exclusively through an axial presser (14) of at least one rigid head (2) of any shape and dimension, provided with a recess (3) with an internal undercut and/or expansion (4), arranged to interface a hole (17) dimensioned as the mouth of the recess (3) itself communicating with the injection mould (18), in which the injection is executed in such a manner that the thermoplastic material (6) spreads from the mould (18) into the recess (3), at whose solidification the cap (1) is removed by simply removing the presser (14); device for respective actuation comprising a translator (12) with fixed travel of the heads (2) with adjustable centring (9) in the picking-up area, a turntable (13) made up of a step plane - preferably rotating horizontal - having a plurality of equally-spaced holes (17) arranged to form a circle, at least one presser (14) suitable to withhold rigid heads (2) of any shape and dimension provided with a recess (3) with an internal undercut and/or expansion (4) to interface - at the upper part - said holes (17) of said turntable (13) with the mouth of said recesses (3), a plurality of moulds (18) integrally joined to said turntable (13) positioned beneath said plane open at said holes (17), at least one injector (19) suitable to inject thermoplastic material (6) into said moulds (18).

## Description

### Field of the art And identification of the technical drawback

The synthetic caps surrogates of oak corks for closing bottles according to the prior art are usually composed of mixtures comprising several thermoplastic elastomers usually constituting polyethylene and/or SEBS (styrene-ethylene-butadiene-styrene) and/or propylene and/or EVA (ethyl vinyl acetate) and/or octene (high intensity polyethylene), usually blended with each other and added with foaming agents, to obtain the inner microcellulation of the finished product, as well as with colouring substances.

In the closure applications of bottles for hard liquor drinks such elastomer caps, just like the natural oak tree caps, are usually associated to a rigid head, made of natural or synthetic material, to facilitate grip, handling and reutilization thereof, in that the characteristics of the liquor drinks are such not to usually finish the content of a bottle all at once, as normal for wine, wherein the cap is usually reutilised.

In order to overcome the drawback of the elastomer caps with rigid head according to the known art, also "T-caps", obtained by gluing between the head and the cork or by overmoulding the latter on a capsule, the applicant in question conceived a two-component structure cap, particularly for liquor bottles, characterized in that it comprises an elastically deformable penetrating body, made of closed-cell foamed elastomer material, constrained by submerging the relative portion under constant polymerisation into a hole with an internal undercut, made in with rigid head preferably obtained made of wood; subject of the patent utility model 259.662 granted on 2^{nd} October 2008 on patent application PS2004U000012 filed on 27th July 2004 with the title "Cap structure" on behalf of Supercap S.r.l.

The technique for producing such cap structure with rigid head provides for the insertion of the head into the injection mould, thus implying the need for a different type of mould for every type of head, with considerable increase of the productions costs, in that the shapes of the heads can obviously vary.

### Object of the invention

Thus, the main object of the present invention, within the context outlined above, is that of providing a method with device for respective actuation for producing elastomer caps with rigid head, of the type made up of a penetrating body made of foamed elastomer material constrained by submerging the relative portion under constant polymerisation into a hole with an internal undercut and/or expansion made in a rigid head, preferably obtained made of wood, so as to overcome the need of using one different mould for each and every type of shape of rigid head used and thus reducing production times and costs.

Another object of the present invention is that of attaining the previous object by means of a method and device for respective actuation suitable for immediate industrial application.

Still, another object of the present invention is that of attaining the previous objects by means of a method and device for respective actuation which use the components according to the prior art as much as possible so as to reduce the actuation costs thereof.

A further object of the present invention is that of attaining the previous objects by means of a method and device for respective actuation that are simple and efficient, safe in operation and relatively inexpensive considering the results practically obtained therewith.

### Summary of the concept solution

These and other objects are attained through the method for producing thermoplastic caps (1) with rigid head (2) according to the present invention, of the type made up of an elastically deformable penetrating body (6) made of closed-cell foamed elastomer material constrained by submerging the relative portion (7) under constant polymerisation in a recess (3) with an internal undercut and/or expansion (4) made in a rigid head (2), preferably obtained made of wood, comprising translation with fixed travel (12) and retention exclusively through an axial presser (14) of at least one rigid head (2) of any shape and dimension, provided with a recess (3) with an internal undercut and/or expansion (4), arranged to interface a hole (17) dimensioned as the mouth of the recess (3) itself communicating with the injection mould (18), in which the injection is executed in such a manner that the thermoplastic material (6) spreads from the mould (18) into the recess (3), at whose solidification the cap (1) is removed by simply removing the presser (14); as well as through a device for respective actuation according to the present invention, a translator (12) with fixed travel of the heads (2) with adjustable centring (9) in the picking-up area, a turntable (13) made up of a step plane - preferably rotating horizontal - having a plurality of equally-spaced holes (17) arranged to form a circle, at least one presser (14) suitable to withhold rigid heads (2) of any shape and dimension provided with a recess (3) with an internal undercut and/or expansion (4) to interface - at the upper part - said holes (17) of said turntable (13) with the mouth of said recesses (3), a plurality of moulds (18) integrally joined to said turntable (13) positioned beneath said plane open at said holes (17), at least one injector (19) suitable to inject thermoplastic material (6) into said moulds (18).

### Description of the attached drawings

Further characteristics and advantages of the method for producing thermoplastic caps with rigid head and of the device for respective actuation according to the present invention, will be more apparent from the following detailed description of a preferred but not exclusive embodiment thereof, represented solely by way of non-limiting example in the two attached drawings, wherein:
figure 1 is a schematic view of the implementation steps of the method for producing thermoplastic caps with rigid head according to the present invention.
figure 2 is a schematically illustrated plan view of a device for implementing the method according to the present invention;
figure 3 is a longitudinal cross-sectional view of a thermoplastic cap with rigid head made using the device for implementing the method according to the present invention.

### Static description of the embodiment

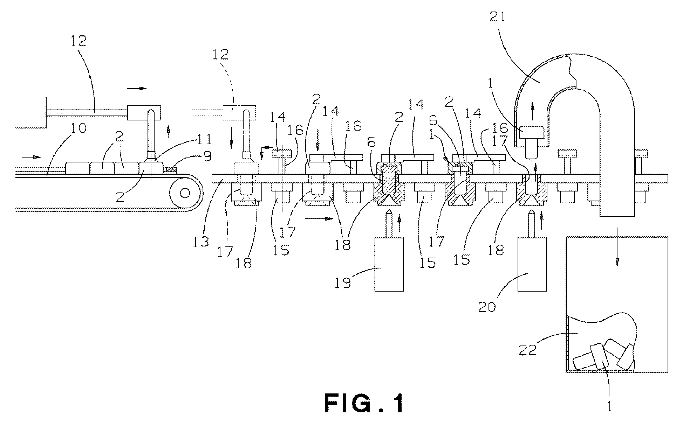

With reference to such figures, and in particular to figure 1, reference number 2 is used to indicate the rigid heads, for example of the plane-cylindrical shape, of elastomer caps 1 of the type referred to as "T-caps", carried by conveyor means 10 to the centring means 9 for the respective picking up to attain the automatic centring of the heads regardless of the diametric dimension thereof, picking-up thereof being carried out by fixed travel removal 11 and transfer 12 means.

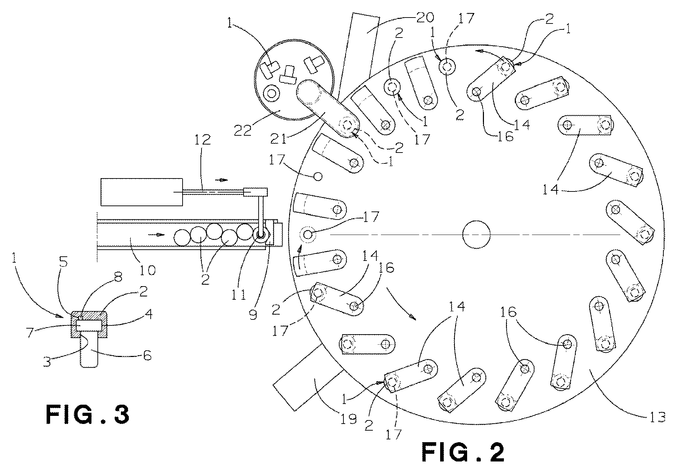

The heads 2 for the caps 1 have a recess 3 (see figure 3) with inner expansion notch 4 and, possibly but not necessarily, a misaligned blind hole 5 made in said inner expansion notch 4 of the recess 3, into which there is submerged an elastically deformable penetrating body 6 made of closed-cell foamed elastomer material, constrained by submerging the relative internal portion with enlarged diameter 7 under constant polymerisation, branching into a radial retention pin 8 which is inserted into a misaligned blind hole 5 of the head 2 when necessary.

Reference number 13 is used to indicate a work plane preferably moveable and horizontal, supporting at least one but preferably a plurality of presser means 14 connected to respective actuators 15, suitable to position them axially and angularly above and away from at least one, but preferably a plurality of equally spaced holes 17, dimensioned as the mouths of the recesses 3 of the heads 2.

Each of the holes 17 is adjacent to a respective mould 18, located beneath the moveable work plane 13.

At least one injector 19 for thermoplastic material and at least one ejector 20 interact with the moulds 18.

Figure 2 illustrates - by way of example - a device for implementing the method for producing thermoplastic caps 1 with rigid head 2 according to the present invention, whose implementation steps are schematically illustrated in figure 1:
The conveyor means 10 for moving a plurality of consecutive rigid heads 2 are represented by a conveyor belt 10 and the centring means 9 for the respective picking up are represented by a stop abutment means 9, for example V-shaped positionable adjustable to attain the automatic centring of the heads in a picking-up zone regardless of the relative diametric dimension of the heads 2, where the fixed travel removal and transfer means 11 are made up of a suction cup 11 and a translator 12, for example pneumatic.
The moveable work plane 13 is made up of a circular turntable 13 with vertical rotation axis, circumferentially supporting a plurality of pressure arms 14 actuated by respective actuators 15, preferably represented by pneumatic devices, suitable to subject the respective pivoting pin 16 to axial and angular travels to engage and disengage the area of equally spaced holes 17, made circumferentially on the turntable 13, dimensioned as the mouths of the recesses 3 of the heads 2.
An injection mould 18, open at the respective hole 17 is located beneath each of the holes 17 of the circular turntable 13.
Reference number 19 is used to indicate an injector for thermoplastic material illustrated schematically, an underlying moveable work plane 13 as well as a respective injection station.
Reference number 20 is used to indicate an ejector preferably made up of a compressed air supplier illustrated schematically, an underlying moveable work plane 13, as well the respective station for ejecting the caps 1, intercepted - at the upper part - by a conveyor pipe 21 and carried in a container 22 for the finished product, for the purposes to be outlined hereinafter.

### Dynamic description of the embodiment

Thus having completed the static description of a preferred embodiment of the device for implementing the method for producing thermoplastic caps with rigid head according to the present invention, following is the dynamic description thereof, i.e. the respective operation:
The heads 2 of the caps 1 are carried by the conveyor 10 and, at the end thereof, they are picked up by the suction cup 11 of the translator 12.

Through a suitable adjustment of the stop abutment means 9, V-shaped for the automatic centring of the heads 2 in a picking-up zone when required, the heads 2 consecutively reaching thereto are always centred with respect to the axis of the suction cup 11, regardless of the relative diameter and shape, so that the travel of the translator 12 is always fixed, to transfer to one the heads 2 on a hole 17 of the circular turntable 13, while the holes 17 follow each other in appropriate position in the motion thereof step by step, in relative accurate position to interface - at the upper part - said holes of said turntable with the mouth of said recesses.

In such position of translation of the heads 2 the hole 17 contingently in loco is free from the respective presser arm, which immediately after deposition rotates and descends to exert axial pressure on the head 2, holding it there over the entire operating cycle to obtain the two-component cap.

The injector 1 already intervenes in the subsequent step, to inject thermoplastic material 6 into the mould 18, which spreads therefrom, through the hole 17 of the turntable 13, into the recess 3 and the inner expansion notch 4 of the head 2, held thereon by the presser arm 14 against the pressure of injection without requiring any capsuling of the head 2 whatsoever, so that by imparting exclusively an axial pressure to the presser arm, the head 2 may be of any diametric and axial dimension as well as any shape.

In the subsequent steps, the pressers 14 maintain the axial pressure thereof on the respective heads 2, so that the thermoplastic resin 16 solidifies gradually to form the penetrating body 16 in the mould 18 and to form the adjacent internal coupling portion with enlarged diameter 7 in the inner expansion notch 4 of the recess 3 of the head 2.

Thus, for an entire rotation of the turntable 13 until - before reaching the translator 12 once again to receive a new head 2 - the pressers 14 move near the ejection station 20, where a jet of compressed air is introduced into the mould 18 and the cap 1 already solidified thereon also in the thermoplastic component exits from the respective hole 17 and it is intercepted by a conveyor pipe 21, to end up in the container 22 for the finished product, and so on and so forth for consecutive continuous production cycles.

### Alternative embodiment

It is obvious that further alternative embodiments still falling within the concept solution under the embodiment illustrated above and claimed hereinafter, the method for producing thermoplastic caps with rigid head according to the present invention and the device for respective actuation according to the present invention may be obtained using equivalent technical and mechanical materials, i.e. provided with further supplementary solutions, same case applying to all configurations of the respective components which may vary to suit the purpose.

In particular:
the recess of the caps may be alternatively internally structured to form an undercut and/or expansion;
the pressers may be alternatively conceived being of the type with two arms, suitable to simultaneously engage two adjacent holes of the turntable and simultaneously exert axial pressure on two adjacent heads inserted therein;
the turntable may however be alternatively structured and shaped to suit the purpose.

### Advantages of the invention

As observable from the detailed description above regarding a preferred embodiment and from the previously indicated variant embodiment, the method for producing thermoplastic caps with rigid head according to the present invention and the device for respective actuation according to the present invention offers advantages corresponding to the attainment of the preset objects as well as other objects:
Actually, it integrates a functional, modular, polyvalent and economic automatic device suitable to obtain the production of two-component thermoplastic caps with mechanical constraint having a rigid head using a single polyvalent mould regardless of the dimension, type and shape of head.

### Scope of protection

Thus, having described the method for producing thermoplastic caps with rigid head according to the present invention and the device for respective actuation according to the present invention with reference to a preferred embodiment thereof, there obviously arises the need to protect all possible embodiments with variants of implementation known to those skilled in the art, which shall not modify the invention without departing from the objects provided for by the same; this implies, both in the description above and in the claims that follow, protecting all embodiments and variants that fall within the concept solution, for the purpose and objects of the invention itself.

### KEY TO REFERENCE NUMBERS

1) cap in its entirety
2) head
3) recess of the head
4) inner expansion notch of the head
5) misaligned hole of the inner expansion notch of the head
6) penetrating body
7) inner portion with enlarged diameter of the penetrating body
8) radial retention pin of the penetrating body
9) adjustable V-shaped stop abutment means for centring heads in a picking-up zone
10) heads conveyor
11) suction cup
12) translator heads
13) circular turntable
14) pressure arms
15) relative actuators
16) relative pivoting pins
17) holes equally spaced circumferentially on the turntable
18) injection moulds
19) injector and injection station
20) ejector and ejection station
21) caps conveyor pipe
22) finished caps container

## Claims

1. Method for producing thermoplastic caps (1) with rigid head (2), of the type made up of an elastically deformable penetrating body (6) made of closed-cell foamed elastomer material constrained by submerging the respective portion (7) under constant polymerisation in a recess (3) with internal undercut and/or expansion (4) made in a rigid head (2), preferably obtained made of wood, **characterised in that** it comprises preferably fixed translation travel (12) and retention exclusively through an axial presser (14) of at least one rigid head (2) of any shape and dimension, provided with a recess (3) with internal undercut and/or expansion (4), arranged to interface a hole (17) dimensioned as the mouth of the recess (3) itself communicating with the injection mould (18), in which the injection is executed in such a manner that the thermoplastic material (6) spreads from the mould (18) into the recess (3), after whose solidification the cap 1 is removed simply by removing the presser (14).

2. Method according to claim one, **characterised in that** it comprises:
- conveyor means (10) suitable to move said heads (2) to the centring means (9) for the respective picking-up to attain the automatic centring of the heads regardless of the diametric dimension thereof, picking-up thereof carried out by fixed travel removal (11) and conveyor (12) means;
- a work plane (13) preferably moveable and horizontal, supporting at least one but preferably a plurality of presser means (14) connected to respective actuators (15) suitable to position them axially and angularly above and away from at least one, but preferably a plurality of equally spaced holes (17) dimensioned as the mouths of said recesses (3) of said heads (2);
- a plurality of moulds (18) respectively adjacent to each of said plurality of holes (17) positioned on the other face of said work plane (13) with respect to said presser means (14);
- at least one injector (19) for thermoplastic material and at least one ejector (20) of said caps (1) interacting with said moulds (18).

3. Device for producing thermoplastic caps (1) with rigid head (2), of the type made up of an elastically deformable penetrating body (6) made of closed-cell foamed elastomer material constrained by submerging the respective portion (7) under constant polymerisation in a recess (3) with internal undercut and/or expansion (4) made in a rigid head (2), preferably obtained made of wood, for implementing the method according to claim one and/or two, **characterised in that** it comprises un translator (12) preferably having a fixed travel of the heads (2) with adjustable centring (9) in the picking-up area, a turntable (13) made up of a step plane - preferably rotating horizontal - having a plurality of equally-spaced holes (17) arranged to form a circle, at least one presser (14) suitable to withhold rigid heads (2) of any shape and dimension provided with a recess (3) with internal undercut and/or expansion (4) to interface - at the upper part - said holes (17) of said turntable (13) with the mouth of said recesses (3), a plurality of moulds (18) integrally joined to said turntable (13) positioned beneath said plane open at said holes (17), at least one injector (19) suitable to inject thermoplastic material (6) into said moulds (18).

4. Device according to claim three, **characterised in that** it comprises:
- conveyor means (10) for moving a plurality of consecutive rigid heads (1) represented by a conveyor belt (10);
- centring means (9) for picking-up said rigid heads (1) represented by a V-shaped stop abutment means (9) positionable adjustable to attain the automatic centring of the heads in the picking-up zone regardless of the diametric dimensions of the same heads (2);
- means for removing and conveying said heads (2) with fixed travel (11) made up of a suction cup (11) and a pneumatic translator (12);
- a moveable work plane (13) made up of a circular turntable (13) with vertical rotation axis step-rotating and circumferentially supporting a plurality of presser arms (14) actuated by respective pneumatic actuators (15) suitable to subject the respective pivoting pin (16) thereof to axial and angular excursions to engage and disengage the area of equally-spaced holes (17) made circumferentially on said turntable (13) and dimensioned as mouths of said recesses (3) of said heads (2);
- an injection mould (18) positioned beneath each of said holes (17) of said circular turntable (13) open at the respective hole (17) itself;
- an injector for thermoplastic material (19) underlying said circular turntable (13) suitable to perform injection into said moulds (18);
- an ejector (20) made up of a compressed air supplier underlying said circular turntable (13) interacting with a conveyor pipe (21) for transferring said caps (1) into a container (22) for the finished product.

5. Device according to claim three or four, **characterised in that** said presser means (14) have two arms suitable to simultaneously engage two adjacent holes (17) of said turntable (13) and simultaneously exert axial pressure on two adjacent heads (2) supported therein at said holes (17).

6. Method for producing thermoplastic caps (1) with rigid head (2) and device for respective actuation according to any one of the preceding claims, **characterised in that** said recess (3) of said heads (2) is structured with internal expansion (4).

7. Method for producing thermoplastic caps (1) with rigid head (2) and device for respective actuation according to any one of the preceding claims, **characterised in that** said recess (3) of said heads (2) is structured to form an undercut.

8. Method for producing thermoplastic caps (1) with rigid head (2) and device for respective actuation according to any one of the preceding claims, **characterised in that** said recess (3) of said heads (2) is structured to form an undercut with internal expansion (4).

9. Method for producing thermoplastic caps (1) with rigid head (2) and device for respective actuation according to any one of the preceding claims, **characterised in that** said recess (3) of said heads (2) is structured to form an undercut or internal expansion (4) or an undercut with internal expansion (4) and it has a misaligned hole (5) for the insertion of a radial retention pin (8) of the penetrating body (6).

10. Method for producing thermoplastic caps (1) with rigid head (2) and device for respective actuation according to any one of the preceding claims and substantially as described and illustrated in the attached drawings as well as for the specified purposes.
